Europäisches Patentamt

European Patent Office

Office européen des brevets

(19)

(11) Veröffentlichungsnummer: **0 073 339**
**A2**

(12) **EUROPÄISCHE PATENTANMELDUNG**

(21) Anmeldenummer: 82106691.7

(22) Anmeldetag: 23.07.82

(51) Int. Cl.³: **C 12 C 1/04, F 26 B 25/00**

(30) Priorität: 01.09.81 DE 3134490
28.06.82 DE 3224281

(71) Anmelder: **Steinhaus, Harald, Dr.-Ing., Hafenstrasse 19,
D-4354 Datteln (DE)**

(43) Veröffentlichungstag der Anmeldung: **09.03.83
Patentblatt 83/10**

(72) Erfinder: **Steinhaus, Harald, Dr.-Ing., Hafenstrasse 19,
D-4354 Datteln (DE)**

(74) Vertreter: **Brehm, Hans-Peter, Dr. Dipl.-Chem. et al,
Patentanwälte Tischer, Kern & Brehm
Albert-Rosshaupter-Strasse 65, D-8000 München 70 (DE)**

(84) Benannte Vertragsstaaten: **AT BE CH DE FR GB IT LI LU
NL SE**

(54) Verfahren und Anlage zur Wärmerückgewinnung aus der Darrfortluft von Einhordendarren.

(57) Die Darrfortluft von Einhordendarren (1) wird vor dem Kreuzstromwärmetauscher (2) in zwei Teilströme aufgeteilt, wovon der eine Teilstrom in dem Kreuzstromwärmetauscher (2) die Darrzuluft erwärmt und der weitere Teilstrom als Wärmequelle für eine Wärmepumpe benutzt und durch deren Verdampfer (3) geführt wird. Nachdem dieser Teilstrom im Wärmepumpen-Verdampfer (3) abgekühlt und entfeuchtet worden ist, kann dieser Luftstrom – unter Berücksichtigung der Witterungsbedingungen – mit Frischluft vermischt und der dabei gebildete Gesamtluftstrom dem Kreuzstromwärmetauscher der Darre als Zuluft zugeführt werden. Nach einer weiteren Abwandlung kann der Fortluftstrom aus dem Verdampfer (3) der Wärmepumpe zur Keimkastenkühlung benutzt und dem Keimkasten (10) zugeführt werden. Gegebenenfalls kann in diesem Teilstrom vor dem Wärmepumpenverdampfer (3) oder dem letzten Hilfswärmepumpen-Verdampfer (3'') Frischluft eingeführt werden.

0073339

Verfahren und Anlage zur Wärmerückgewinnung aus der
Darrfortluft von Einhordendarren

Die Erfindung betrifft ein Verfahren und eine Anlage zur
Wärmerückgewinnung aus der Darrfortluft von modernen
Einhordendarren, wobei die Darrfortluft durch einen
Kreuzstromwärmetauscher und den Verdampfer einer Wärmepumpe geführt wird.

Ein Verfahren und eine Anlage der genannten Art ist aus
der Deutschen Offenlegungsschrift 28 02 907 bekannt.
Nach jenem bekannten Vorschlag wird zur höchstmöglichen
Rückgewinnung der eingesetzten Wärmemenge ein Glasröhrenwärmetauscher in Reihe mit einem Verdampfer einer Wärmepumpe geschaltet. Die Abwärme enthaltende Darrfortluft
durchströmt zunächst den Glasröhrenwärmetauscher, anschließend den Verdampfer einer Wärmepumpe, um dann stark
abgekühlt im Kreuzstrom den Glasröhrenwärmetauscher auf
der anderen Seite zu passieren. Beim Durchstreichen durch
den Glasröhrenwärmetauscher wird aufgrund von Kondensation eine große Wassermenge ausgeschieden. Dies geschieht ebenfalls nochmal in dem Verdampfer der Wärmepumpe. Die so abgekühlte Luft wird anschließend wieder erwärmt und als Trocknungsluft in die Darre eingeführt. Nach dem bekannten Vorschlag hat die Darrfortluft bereits einen erheblichen Anteil ihres Gehaltes an fühlbarer und latenter Wärme beim Durchströmen des Kreuzstromwärmetauschers abgegeben, bevor sie in den Verdampfer der Wärmepumpe gelangt. Sofern der letztere noch erhebliche Energiebeträge aus der bereits abgekühlten Darrfortluft entnehmen soll, muß dieser Wärmepumpenverdampfer als Kühlaggregat wirken, was die Gesamt-Energiebilanz ungünstig beeinflußt.

Ausgehend von einem Verfahren und einer Anlage der eingangs genannten Art besteht die Aufgabe der vorliegenden Erfindung darin, die Energiebilanz bei der Wärmerückgewinnung aus der Darrfortluft zu verbessern. Mit einer zweckmäßigen Ausgestaltung und Weiterbildung soll weiterhin eine bessere Verwendung der Fortluft aus dem Wärmepumpenverdampfer angegeben werden.

Die erfindungsgemäße Lösung dieser Aufgabe ist ein Verfahren mit den in Anspruch 1 angegebenen Maßnahmen bzw. eine Anlage mit den in Anspruch 10 angegebenen Merkmalen. Vorteilhafte Ausgestaltungen und Weiterbildungen der Erfindung ergeben sich aus den Unteransprüchen.

Im wesentlichen ist die erfindungsgemäße Lösung obiger Aufgabe dadurch gekennzeichnet, daß die Fortluft der Einhordendarre(n) vor dem Kreuzstromwärmetauscher in zwei Teilströme aufgeteilt wird, wovon der eine Teilstrom in dem Kreuzstromwärmetauscher die Darrzuluft erwärmt, und der andere Teilstrom als Wärmequelle für die Wärmepumpe benutzt wird.

Der durch den Verdampfer der Wärmepumpe geführte Teilstrom kann etwa 30 bis 70 % des gesamten Darrfortluftstromes ausmachen. Beispielsweise kann der Darrfortluftstrom halbiert werden, so daß der durch den Kreuzstromwärmetauscher geführte Luftstrom etwa gleich groß ist wie der durch den Verdampfer der Wärmepumpe geführte Luftstrom.

In der Darre findet der Trocknungsprozeß des Malzes mit einer Schwelktemperatur von ca. 65°C statt. Die Darrfortluft hat mit einer Temperatur von ca. 26°C und einer Feuchte von mindestens 95 % einen hohen Energiegehalt. Der Temperaturwirkungsgrad der heute üblichen rekuperativ arbeitenden Kreuzstromwärmetauscher liegt etwa zwischen 80 und 90 %. Je nach saisonal- und witterungsbedingtem Zuluftzustand liegt der Enthalpiewirkungsgrad eines solchen Wärmetauschers lediglich zwischen 8 und 30 %, d.h., nur 8 bis 30 % des Energiegehaltes der Darrfortluft können im Kreuzstromwärmetauscher rückgewonnen werden. Demgegenüber bringt die vorliegende Erfindung eine entscheidende Verbesserung.

Geht man von gleich großen Teilströmen aus, so verringert sich der Enthalpiewirkungsgrad der Wärmerückgewinnung am Kreuzstromwärmetauscher um ca. 15 %. D.h., am Kreuzstromwärmetauscher werden bei halbiertem Darrfortluft-Durchsatz nur 15 % weniger Energie zurückgewonnen, als bei ungeteiltem Darrfortluft-Durchsatz. Im Ergebnis heißt das, daß die Teilung des Darrfortluftstromes die Wirkung der rekuperativen Wärmerückgewinnung nur geringfügig einschränkt.

Andererseits steht für den Betrieb des Wärmetauschers im Vergleich zu dem aus der DE-OS 28 02 907 bekannten Vorschlag - Verdampfer der Wärmepumpe hinter dem Kreuzstrom- wärmetauscher - ein energetisch höherwertiger Darrfortluftstrom zur Verfügung. Statt Darrfortluft mit einer
Temperatur von beispielsweise 22 $^{\circ}$C und weniger steht
gemäß der vorliegenden Erfindung Darrfortluft mit einer
Temperatur von ca. 26$^{\circ}$C zur Verfügung. Gerade im Hinblick auf den hohen Feuchtigkeitsgehalt hat dies erhebliche Auswirkungen hinsichtlich der rückgewinnbaren Kondensationswärme. Des weiteren ist der in dem Wärmetauscher
der Wärmepumpenanlage zu verarbeitende Volumenstrom wesentlich kleiner, was zu erheblichen Einsparungen bei
der Installation der Wärmepumpe führt. Da nach der vorliegenden Erfindung aus der Darrfortluft eine größere
Wärmemenge rückgewonnen wird, kann bei der Verwirklichung
der vorliegenden Erfindung mit der Wärmepumpenanlage
- je nach Jahreszeit und Umgebungsbedingungen - zwischen
30 und 80 % der für den Darrprozeß notwendigen Restwärme
erzeugt werden, was für die Praxis eine beträchtliche
Energieeinsparung bedeutet.

Die Entfeuchtung des Teilluftstromes der Darrfortluft
bei der Wärmeabgabe im Verdampfer der Wärmepumpe bietet
einen weiteren Ansatzpunkt zur Energieeinsparung. Ist
der entfeuchtete Teilluftstrom beim Austritt aus dem Verdampfer der Wärmepumpe wärmer als die Zuluft, was in
der kalten Jahreszeit der Fall ist, so kann der entfeuchtete Teilluftstrom über einen Luftkanal vor den Kreuzstromwärmetauscher geleitet werden. Dort wird er mit
kälterer Zuluft vermischt und dem Darrprozeß über den
Kreuzstromwärmetauscher wieder zugeführt. An kalten Tagen mit Temperaturen um 0$^{\circ}$C läßt sich durch diese Änderung der Luftführung eine weitere Energieeinsparung realisieren.

Nach einem weiteren Gesichtspunkt der Erfindung kann der
Verdampfer der Wärmepumpenanlage unter solchen Bedingungen betrieben werden, daß der in diesem Verdampfer abgekühlte und entfeuchtete Teilluftstrom der Darrfortluft gerade solche Bedingungen aufweist, daß er gänzlich oder teilweise der Keimkastenkühlung zugeführt werden kann. Vorzugsweise wird der Verdampfer oder die Verdampfer der Wärmepumpenanlage in diesem Falle unter solchen Bedingungen betrieben, daß der Fortluftstrom eine Temperatur zwischen 5 und 15°C aufweist. Vorzugsweise soll dieser Fortluftstrom eine relative Luftfeuchtigkeit von etwa 100 % aufweisen. Ein feuchtigkeitsgesättigter Luftstrom mit einer Temperatur zwischen 5 und 15°C, vorzugsweise zwischen 10 und 15°C, ist für die Keimkastenkühlung besonders gut geeignet.

Nach einem weiteren Gesichtspunkt der Erfindung kann in dem Teilstrom der Darrfortluft noch vor dessen Eintritt in den Wärmepumpen-Wärmetauscher Frischluft eingeführt werden. In diesem Falle muß die Wärmepumpe eine geringere Kühlleistung erbringen, oder bei gegebener Wärmepumpen-Kühlleistung wird eine größere Menge kalter Kühlkastenluft erhalten.

Schließlich können nach einer weiteren vorteilhaften Ausgestaltung der Erfindung mehrere Wärmepumpen-Wärmetauscher vorhanden sein. Diese mehreren Wärmetauscher, gut geeignet ist beispielsweise eine Gruppe von zwei oder drei getrennten Wärmetauschern, können zu getrennten Wärmepumpen gehören, die nach einem weiteren Gesichtspunkt der Erfindung mit unterschiedlichen Kühlmitteln betrieben werden können, beispielsweise mit den bekannten Frigenen "R 12" und "R 22". Hierdurch kann eine größere Flexibilität bei der Anpassung an die Schwankung der Umgebungsluftbedingungen erzielt und die Gesamtleistungsziffer bei der Nutzung der Darrfortluft gesteigert werden. Die Keimkastenkühlung erfordert einen kalten Luftstrom hoher Luftfeuchtigkeit. Es ist bereits erwogen worden, der Frischluft mittels eines rekuperativen Wärmetauschers einer Wärmepumpenanlage Wärme zu entziehen, diese Wärme anderen Bedarfsstellen zuzuführen, und die gekühlte Frischluft der Keimkastenkühlung zuzuführen. Dieser Vorschlag könnte sich in der Praxis nicht durchsetzen, weil die Betriebsführung der Wärmepumpenanlage nicht im erforderlichen Ausmaß an die Schwankungen der Umgebungsluft-Bedingungen anpaßbar waren. Demgegenüber erzeugen die modernen Einhordendarren einen Fortluftstrom, dessen Parameter wie Temperatur- und Luftfeuchtigkeit nur in geringen Grenzen schwanken. Zumeist weist diese Darrfortluft eine Temperatur von ca. 26$^O$C, eine relative Luftfeuchtigkeit von mindestens 95 % auf. Da nur ein Teilstrom dieser Darrfortluft durch den oder die Wärmepumpen-Wärmetauscher geführt wird, und die Anforderungen an die Keimkasten-Kühlluft im jahreszeitlichen Verlauf nur geringfügig schwanken, erlaubt diese Ausgestaltung der Erfindung zur Nutzung des Wärmegehaltes der Darrfortluft eine optimale Auslegung der Wärmepumpenanlage und deren konstante Betriebsweise.

Nachstehend wird die Erfindung im einzelnen anhand bevorzugter Ausführungsformen mit Bezugnahme auf die Zeichnungen erläutert; die letzteren zeigen:

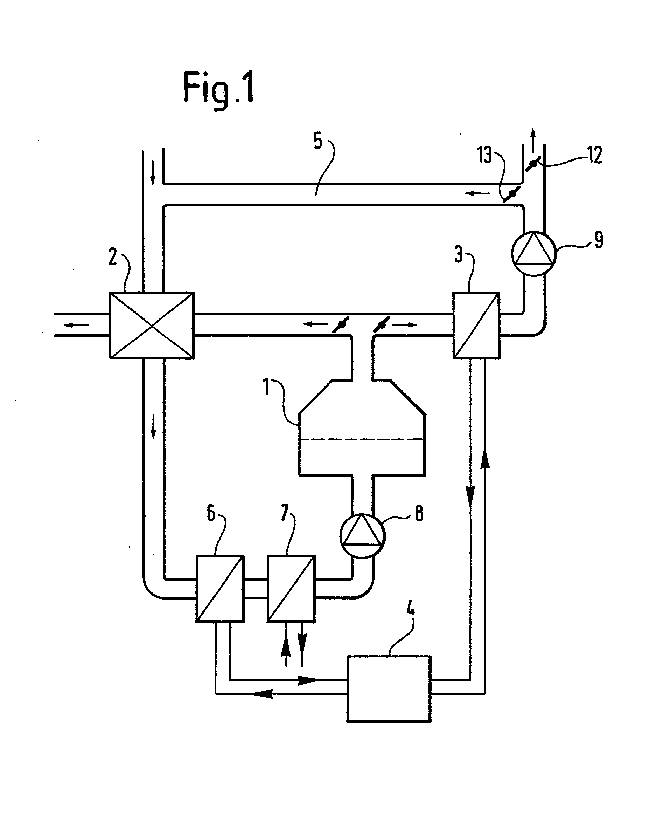

Fig. 1    ein Fließschema zur Wärmerückgewinnung aus der Darrfortluft gemäß der vorliegenden Erfindung;

Fig. 2    ein Fließschema ähnlich dem der Fig. 1, wobei die Fortluft aus dem Verdampfer der Wärmepumpenanlage der Keimkastenkühlung zugeführt wird;

Fig. 3    das Fließschema nach Fig. 2, ergänzt durch eine zusätzliche Frischluftzufuhr in den Darrfortluftstrom; und

0073339

Fig. 4    anhand einer schematischen Darstellung die
          Verwendung mehrerer Wärmepumpen-Wärmetauscher bei der Nutzung des Teilstromes der
          Darrfortluft zur Keimkastenkühlung.

In der Darre 1 findet der Trocknungsprozeß des Malzes mit
einer Schwelktemperatur von ca. 65$^{\circ}$C statt. Die Darrfortluft weist mit einer Temperatur von ca. 26$^{\circ}$C und einem
relativen Luftfeuchtigkeitsgehalt von wenigstens 95 %
einen hohen Energiegehalt auf. Ein Teilstrom zur Darrfortluft wird unmittelbar durch den rekuperativ arbeitenden Kreuzstromwärmetauscher 2 geführt und erwärmt
dort die zugeführte Frischluft. Ein anderer Teilstrom
der Darrfortluft, der beispielsweise gleich groß wie
der, dem Kreuzstromwärmetauscher zugeführte Teilstrom
sein kann, wird durch den Wärmetauscher 3 der Wärmepumpenanlage geführt. Dieser Teilstrom erwärmt im Wärmepumpen-Wärmetauscher 3 ein Kühlmittel, beispielsweise eines
der bekannten Frigene, wie etwa "R 12" oder "R 22", das
seinerseits im Kondensor 4 der Wärmepumpenanlage abgekühlt wird; die hierbei auftretende Kondensierungswärme
kann an einen Wasserkreislauf abgegeben werden, der als
Bestandteil der Wärmetauscher 6 und 7 zur Erwärmung der
Darrzuluft vorgesehen ist.Die ausreichend erwärmte Darrzuluft wird dann mittels des Ventilators 8 in die Darre 1
gedrückt.

Der im Verdampfer 3 der Wärmepumpenanlage abgekühlte und
entfeuchtete Teilstrom der Darrfortluft kann in die Umgebung abgelassen werden. Nach einem weiteren Gesichtspunkt
dieser Erfindung kann dieser Fortluftstrom aus dem Wärmepumpen-Wärmetauscher 3 zur Nutzung bei der Malzerzeugung
herangezogen werden.

Insbesondere bei kalten Tagen kann der Fortluftstrom aus dem Wärmepumpen-Wärmetauscher 3 mittels des Ventilators 9 ganz oder teilweise, was von der Stellung der Klappen 12 und 13 abhängt, durch den Luftkanal 5 gedrückt und in die Zuluft zum Kreuzstrom-Wärmetauscher 2 eingeführt werden.

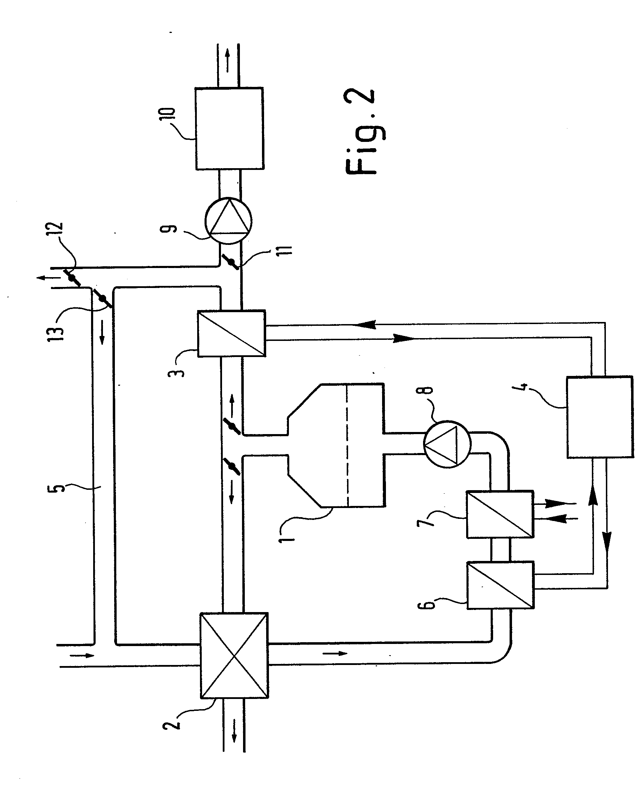

Die Fig. 2 erläutert eine weitere Ausgestaltung der vorliegenden Erfindung, gemäß der der Fortluftstrom aus dem Wärmepumpen-Wärmetauscher 3 gänzlich oder teilweise zur Keimkastenkühlung in den Keimkasten 10 eingeführt wird. Die mengenmäßige Anpassung an die zur Keimkastenkühlung benötigte Kühlluft erfolgt über die Steuerung der Klappen 11, 12 und 13.

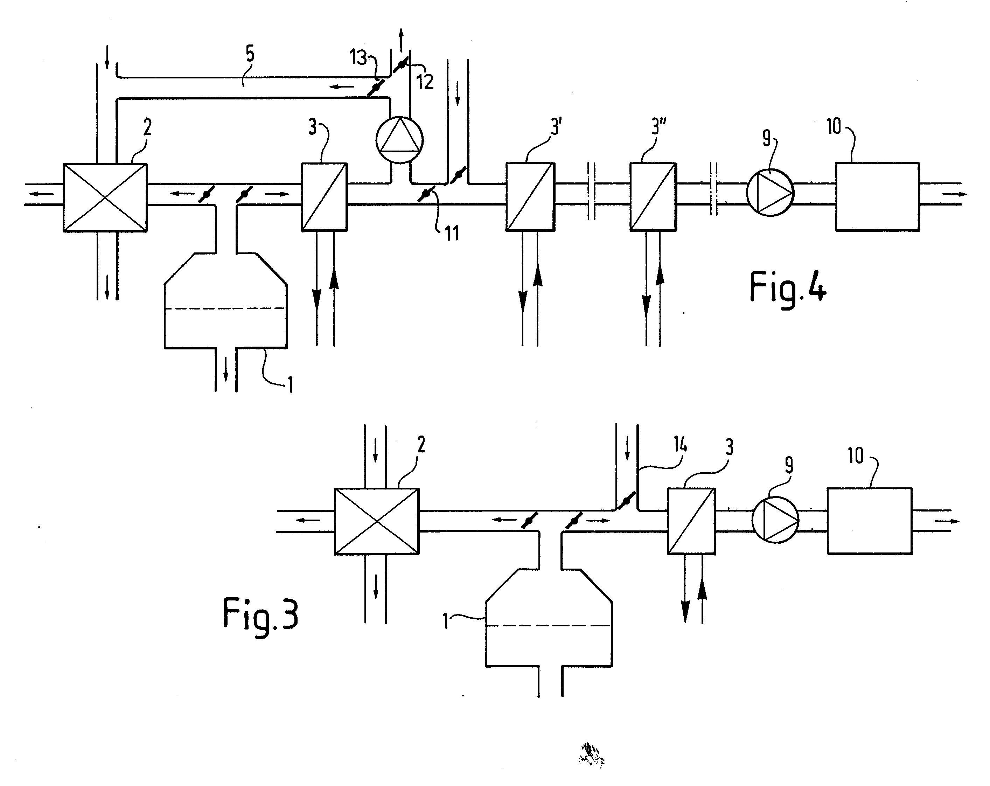

Eine weitere Ausgestaltung der Erfindung wird nachstehend unter Bezugnahme auf Fig. 3 erläutert. Die Fig. 3 ist ein Ausschnitt des Fließschemas nach Fig. 2 und zeigt die nämliche Zuordnung von Darre 1, Kreuzstromwärmetauscher 2, Wärmepumpen-Wärmetauscher 3, Ventilator 9 und Kühlkasten 10. Die Komponenten 4, 6, 7 und 8 sind aus Übersichtlichkeitsgründen weggelassen, entsprechen jedoch denen der Fig. 2. Bei dieser Ausführungsform wird - abweichend von jener nach Fig. 2 - in den den Wärmepumpen-Wärmetauscher 3 zugeführten Teilstrom der Darrfortluft über den Stutzen 14 Frischluft zugeführt. Die zugeführte Frischluftmenge kann mittels der Klappe 15 geregelt werden. Damit in diesem Falle die Betriebsführung der Wärmepumpenanlage von den schwankenden Frischluft-Bedingungen nicht übermäßig beeinträchtigt wird, macht die zugeführte Frischluftmenge stets weniger als 50 %, vorzugsweise weniger als 35 % der Menge des dem Wärmepumpen-Wärmetauscher 3 zugeführten Gesamt-Luftstromes aus. Diese Frischluftzuführung erfolgt vor dem Wärmepumpen-Wärmetauscher 3. Der Fortluftstrom aus dem Wärmepumpen-Wärmetauscher 3 wird, vom Ventilator 9 beschleunigt, dem Keimkühlkasten 10 zugeführt.

Eine weitere Ausgestaltung der Erfindung wird nachstehend unter Bezugnahme auf Fig. 4 erläutert. Auch Fig. 4 ist ein Ausschnitt des Fließschemas nach Fig. 2 mit der nämlichen Zuordnung von Darre 1, Kreuzstromwärmetauscher 2, Wärmepumpen-Wärmetauscher 3, Luftkanal 5 und Klappen 11, 12 und 13; wiederum sind die Komponenten 4, 6, 7 und 8 aus Übersichtlichkeitsgründen nicht dargestellt, entsprechen jedoch denen der Fig. 2. Bei dieser Ausführungsform sind zusätzlich zum Wärmepumpen-Wärmetauscher 3 ein oder mehrere Hilfswärmepumpen-Wärmetauscher 3' bzw. 3" vorgesehen. Hierdurch kann der Teilstrom der Darrfortluft stufenweise abgekühlt werden, und die nach jeder Abkühlungsstufe erhaltene Fortluft kann einer gezielten Verwendung zugeführt werden. In den Fortluftstrom des Wärmepumpen-Wärmetauschers 3 kann Frischluft eingeführt werden, und das gebildete Luftgemisch kann dann einstufig mittels des Hilfs-Wärmepumpen-Wärmetauschers 3' oder zweistufig unter zusätzlicher Anwendung des Hilfs-Wärmepumpen-Wärmetauschers 3" auf die zweckmäßige Keimkasten-Kühltemperatur abgekühlt werden. Auch in diesem Falle macht die Menge der in den bereits gekühlten Darrfortluft-Teilstrom eingeführten Frischluft weniger als 50 %, vorzugsweise weniger als 35 % des dem Hilfs-Wärmepumpen-Wärmetauscher 3' zugeführten Luftstromes aus. Aus dem Fortluftstrom des Wärmepumpen-Wärmetauschers 3 kann bei Bedarf ein Teilstrom abgezweigt und über den Kanal 5 vor den Kreuzstromwärmetauscher 2 geführt und dort in den Frischluftstrom eingebracht werden. Vorzugsweise werden einerseits der Wärmepumpen-Wärmetauscher 3 und andererseits die Hilfs-Wärmepumpen-Wärmetauscher 3' und gegebenenfalls 3" mit unterschiedlichen, an ihren Arbeitsbereich besonders angepaßten Kühlmitteln betrieben. Schließlich wird die Fortluft aus dem letzten Hilfs-Wärmepumpen-Wärmetauscher vom Ventilator 9 in den Keimkühlkasten 10 eingeblasen.

Patentansprüche:

1. Verfahren zur Wärmerückgewinnung aus der Darrfortluft von modernen Einhordendarren, wobei die Darrfortluft durch einen Kreuzstromwärmetauscher und den Verdampfer einer Wärmepumpe geführt wird, dadurch gekennzeichnet, daß die Fortluft der Einhordendarre(n) vor dem Kreuzstromwärmetauscher in zwei Teilströme aufgeteilt wird, wovon der eine Teilstrom in dem Kreuzstromwärmetauscher die Darrzuluft erwärmt, und der andere Teilstrom als Wärmequelle für die Wärmepumpe benutzt und durch deren Verdampfer geführt wird.

2. Verfahren nach Anspruch 1, dadurch gekennzeichnet, daß 30 bis 70 % der gesamten Darrfortluft durch den Verdampfer der Wärmepumpe geführt werden.

3. Verfahren nach Anspruch 2, dadurch gekennzeichnet, daß die zwei Teilströme gleich groß sind.

4. Verfahren nach einem der Ansprüche 1 bis 3, dadurch gekennzeichnet, daß der teilweise entfeuchtete Fortluftstrom aus dem Verdampfer der Wärmepumpe unter Berücksichtigung der Witterungsbedingungen mit Frischluft vermischt, und der dabei gebildete Gesamtluftstrom dem Kreuzstromwärmetauscher der Darre als Zuluft zugeführt wird.

0073339

5. Verfahren nach einem der Ansprüche 1 bis 3,
<u>dadurch gekennzeichnet</u>, daß
der Fortluftstrom aus dem Wärmepumpen-Wärmetauscher
gänzlich oder teilweise der Keimkastenkühlung zugeführt wird.

6. Verfahren nach Anspruch 5,
<u>dadurch gekennzeichnet</u>, daß
der Fortluftstrom aus dem Wärmepumpen-Wärmetauscher
eine Temperatur zwischen 5 und 15°C aufweist.

7. Verfahren nach Anspruch 5 oder 6,
<u>dadurch gekennzeichnet</u>, daß
der Fortluftstrom aus dem Wärmepumpen-Wärmetauscher
eine relative Luftfeuchtigkeit von etwa 100 % aufweist.

8. Verfahren nach einem der Ansprüche 5 bis 7,
<u>dadurch gekennzeichnet</u>, daß
in den Teilstrom der Darrfortluft noch vor dessen
Eintritt in den Wärmepumpen-Wärmetauscher Frischluft
eingeführt wird.

9. Verfahren nach einem der Ansprüche 5 bis 8,
<u>dadurch gekennzeichnet</u>, daß
eine Wärmepumpenanlage mit mehreren Wärmetauschern
verwendet wird.

0073339

10. Anlage zur Wärmerückgewinnung aus der Darrfortluft von modernen Einhordendarren mit einem Kreuzstromwärmetauscher und einer Wärmepumpe,
dadurch gekennzeichnet, daß
die Fortluft der Einhordendarre (1) vor dem Kreuzstromwärmetauscher (2) in zwei Teilströme aufgeteilt wird, wovon der eine Teilstrom in dem Kreuzstromwärmetauscher die Darrzuluft erwärmt, und der andere Teilstrom als Wärmequelle für die Wärmepumpe benutzt und durch deren Verdampfer (3) geführt wird.

11. Anlage nach Anspruch 10,
dadurch gekennzeichnet, daß
der Fortluftstrom aus dem Verdampfer (3) der Wärmepumpe gänzlich oder teilweise über den Luftkanal (5) in den Zuluftstrom zum Kreuzstromwärmetauscher (2) einführbar ist.

12. Anlage nach Anspruch 10,
dadurch gekennzeichnet, daß
der Fortluftstrom aus dem Verdampfer (3) der Wärmepumpe gänzlich oder teilweise zur Keimkastenkühlung benutzt und dem Keimkasten (10) zuführbar ist.

13. Anlage nach Anspruch 12,
dadurch gekennzeichnet, daß
mehrere Wärmepumpen-Verdampfer (3, 3', 3'') vorhanden sind.

0073339

14. Anlage nach Anspruch 12 oder 13,
    <u>dadurch gekennzeichnet</u>, daß
    in den Teilstrom der Darrfortluft noch vor dem Wärmepumpen-Verdampfer (3) oder vor dem letzten Hilfs-
    Wärmepumpen-Verdampfer (3") Frischluft einführbar ist.

0073339

Fig.1

Fig. 2

Fig.4

Fig.3

0073339